# EUROPEAN PATENT SPECIFICATION

(11) **EP 0 326 387 B1**
(45) Date of publication and mention of the grant of the patent: **06.04.1994**
(21) Application number: 89300760.9
(22) Date of filing: 26.01.1989
(51) Int. Cl.: G02F 1/135, G09G 3/30

(54) **Light modulating device**
Lichtmodulationsvorrichtung
Dispositif de modulation de la lumiére

(30) Priority: 26.01.1988 JP 13499/88
(43) Date of publication of application: 02.08.1989
(73) Proprietor: CANON KABUSHIKI KAISHA, Tokyo (JP)
(72) Inventor: Matsuda, Hiroshi, Isehara-shi Kanagawa-ken (JP); Kawada, Haruki, Yokohama-shi Kanagawa-ken (JP); Sakai, Kunihiro, Isehara-shi Kanagawa-ken (JP); Takimoto, Kiyoshi, Kawasaki-shi Kanagawa-ken (JP); Kawade, Hisaaki, Atsugi-shi Kanagawa-ken (JP); Yanagisawa, Yoshihiro, Atsugi-shi Kanagawa-ken (JP); Morikawa, Yuko, Yokohama-shi Kanagawa-ken (JP)
(74) Representative: Beresford, Keith Denis Lewis

(56) References cited:
- EP-A- 0 179 914
- WO-A-87/00643
- US-A- 3 824 002
- US-A- 3 944 332
- US-A- 4 538 884
- US-A- 4 619 501
- PATENT ABSTRACTS OF JAPAN, vol. 6, no. 255 (P-162)[1133], 14th December 1982; & JP-A-57 150 821

## Description

This invention relates to a light modulating device used as a display panel, and more particularly relates to a light modulating device which is suitable for a display medium, such as liquid crystal or the like.

### Description of the Prior Art

In general, the driving method in the display device using liquid crystal material, electroluminescence (termed hereinafter EL) or the like, can be classified into the static driving method and the multiplex driving method, according to the difference in the method of supplying signals.

In the former, signals for display or erasing are applied independently to each of display segment (picture element) electrodes. Accordingly, as the amount of display information, i.e., the number of display segments is increased, the number of components, such as electrode terminals, connectors, interconnections, driving circuits or the like, is also proportionately increased. This results in large size of the entire display device and high cost. Hence, this driving method is limited to the applications for the clock, bar graph display, oscilloscope display or the like.

On the contrary, the multiplex driving method is a method for increasing display capacity using fewer driving circuit elements, and for performing the matrix display. In this method, all picture elements are divided into plural groups. Display frame time is also divided, and display signal is applied to each group of picture elements in phase with the divided timing. Hence, this driving method is also called the time sharing driving method. Several techniques are considered in the method for dividing data signal and in the applied wave form. For example, in the liquid crystal display device, there have been devised the voltage averaging method, memory-effect-type driving method, double-channel driving method or the like. In the EL display device, there have been devised the field-refreshing driving method, p-n symmetrical driving method, push-pull symmetrical driving method or the like. In these techniques, however, when it is tried to increase the number of picture elements, the divided number of frame time is also proportionately increased. Hence, the duty ratio (the ratio of the time allocated to each one of scanning lines to the frame time, in the scanning of display signals) becomes small, and the driving margin (the ratio of the effective-value voltage applied to the lighting picture element for display (the selected point) to that applied to the nonlighting picture element (the nonselected point)) is also decreased. Thus, driving becomes difficult.

Now, as a method for solving such problems, the active matrix driving method is attracting attention. The feature of this driving method is, not in the driving wave form, in providing a switching device for each of picture elements. As a result, this driving method has advantages that the duty ratio is 100%, and the driving margin can also be made large. However, although it can be said that the active matrix driving method is a very effective method relative to the quantity of display information and the quality of display, this driving method has disadvantages that it is necessary to provide a switching device for each point of intersection (a picture element), and hence the configuration becomes very complicated. Relative to such switching devices, it has been considered to use the MIM (Metal-Insulator-Metal) devices, varistors, two-terminal devices made of ferroelectric material, ring diodes or the like, three-terminal devices made of CdSe, Te, a-Si, p-Si or the like. However, no matter which switching device is used, it is impossible to avoid the complication of device configuration, and the complication of production process arising therefrom.

US Patent Specification No 3,824,002 in the name of Hughes Aircraft Company discloses a liquid crystal cell held between transparent substrates and in which a plurality of display electrodes can be optically selected to produce a display. The structure of the device disclosed in this specification consists of a photoconductor layer, one or more insulating layers, a liquid crystal material and a further insulating layer.

European Patent application EP-A-0 179 914 discloses a liquid crystal display device of the type defined in the first part of claim 1. In the case of this prior art device, each switching element is a thin-film transistor.

It is an object of the present invention to provide a light modulating device which enables a high-density and high-quality display without complicated configuration.

This object is solved, according to the invention, with the features of claim 1.
FIG. 1 is a schematic diagram of an optical switching device;
FIG. 2 shows voltage-current characteristics of an optical switching device;
FIG. 3 is a configurational diagram of a display device using a liquid crystal;
FIG. 4 is a configurational diagram of a display device using an EL;
FIG. 5 is a configurational diagram of a light-beam scanning system; and
FIG. 6 is a configurational diagram showing an other aspect of a display device using a liquid crystal.

In the present invention, a light source which is a signal input unit, a liquid crystal which is a display medium responsive to electric field or the like may have a conventional well-known configuration. The most charasteristic item of the present invention is an optical switching device.

That is, the present invention has features that this optical switching device comprises an alternately-laminated structure using ultra-thin films of organic materials, and shows a responsive property to light, which is unrivaled compared with conventional devices, ralative to the current-voltage characteristics, and a field-driven-type display medium is directly driven, utilizing such novel responsive property to light. In the light modulating device of the present invention, as described later, it is possible to directly drive a display medium for each picture element. Hence, the driving margin can be made sufficiently large. That is, a high-density and high-resolution display becomes possible.

The basic configuration of an optical switching device used in the present invention will be hereinafter explained.

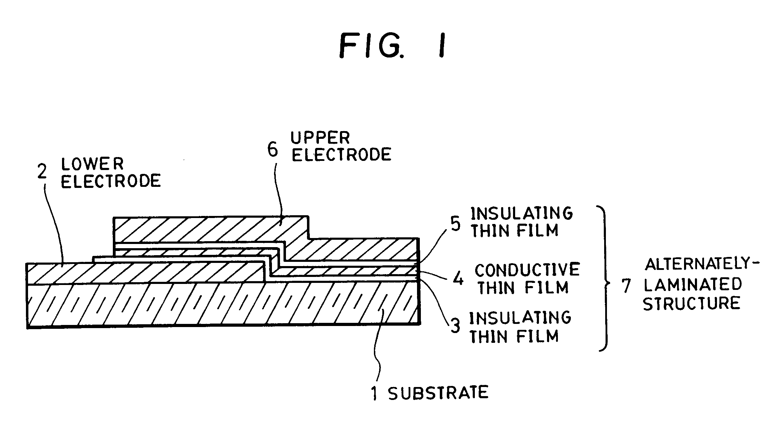

FIG. 1 is a schematic diagram of an optical switching device used in the present invention. In FIG. 1, between a lower electrode 2 formed on a substrate 1 and an upper electrode 6, an alternately-laminated structure 7 consisting of an insulating thin film 3, a conductive thin film (or a semiconductive thin film, the same expression holds hereafter) 4 and an insulating thin film 5 is held. As materials for the electrodes used here, many materials can be enumerated, including metals such as Au, Ag, Al, Pt, Ni, Pb, Zn, Sn or the like, alloys of these metals, laminated structures of these metals or alloys, semiconductors such as Si (single-crystal silicon, polysilicon, amorphous silicon), graphite, silicides (nickel silicide, palladium silicide), GaAs, GaP, ITO, NESA or the like, or laminated structures of these semiconductors. The pair of these electrodes may be of the same material or of different materials.

As for the method for forming such electrodes, the conventional well-known techniques for forming thin films may sufficiently achieve the object of the present invention. In forming the electrodes, when the insulating regions of the present device are made of organic materials, the electrode formed after forming the organic insulating layer may preferably be made by a method which is capable of forming a film under the condition of no higher than 300°C. For example, it is possible to use the electrodes formed by the vacuum deposition or sputtering.

Although, in the utilization of the device of the present invention, a radiation is irradiated as an input signal, the electrodes may not necessarily be completely transparent to the radiation, for example, the visible light. For example, even metal electrodes, such as Au, Al and the like, can be used, with the condition that the film thickness is sufficiently small. The film thickness in this case is preferably no larger than 1000 Å, more preferably no larger than 500 Å.

An alternately-laminated structure consisting of a conductive thin film 4 and insulating thin films 3 and 5 are formed between the above-described electrodes. For forming insulating thin films 3 and 5, the vacuum deposition or molecular-beam epitaxy or the like can be utilized. Further, oxide films, such as SiO₂, Al₂O₃ or the like, or nitride films, such as Si₃N₄ or the like, can also be utilized, depending on the configuration of the device. In any case, the insulating film must be an ultra-thin film, i.e., the film thickness is preferably no larger than 500 Å, more preferably no larger than 200 Å, further more preferably no larger than 100 Å and no smaller than 4 Å.

As the most preferred film-forming method for forming the insulating thin films 3 and 5 in a preferred concrete example of the present invention, the LB method can be proposed.

By the LB method, a monomolecular film of an organic compound which has a hydrophobic portion and a hydrophilic portion within one molecule, or an accumulated film thereof can be easily formed on an arbitrary electrode or an arbitrary substrate including an arbitrary electrode. Thus, it is possible to stably supply an organic ultra-thin film which has a film thickness of molecular-length order, and which is uniform and homogeneous over a large area.

The LB method is a method for forming a monomolecular film or an accumulated film thereof utilizing the phenomenon that, in a structure having a hydrophilic portion and a hydrophobic portion within a molecule, molecules form a monomolecular layer on the surface of water directing the hydrophilic group downward, when the balance between the both portions (the balance of the amphiphilic property) is properly maintained.

As groups for forming a hydrophobic portion, there are several kinds of hydrophobic groups which are widely known, such as saturated and unsaturated hydrocarbon groups, condensed polycyclic aromatic groups, chain polycyclic phenyl groups or the like. Each of these groups forms a hydrophobic portion by itself or by the combination of plural groups. On the other hand, as the most typical constituents for the hydrophilic portion, there are hydrophilic groups, such as the carboxyl group, ester group, acid amid group, imide group, hydroxyl group, sulfonyl group, phosphoric acid group, amino groups (primary, secondary, tertiary and fourth) or the like.

Any molecules, which can have both the hydrophobic group and hydrophilic group among these groups in good ballance, can form a monomolecular film on the surface of water. Since, in general, these molecules form an insulating monomolecular film, and, accordingly, an accumulated film of monomolecular layers also shows insulating property, it can be said that these molecules are extremely suitable materials for the present invention. As examples, the following molecules can be enumerated.

### (1) Molecules which have the π-electron levels

Dyes having the polyphylline framework, such as phthalocyanine, tetraphenylpolyphilline or the like, azulene-system dyes having the squarylium group and chlochonic methine group as bond chains, two nitrogen-containing heterocycles , such as quinoline, benzothiazole, benzoxazole or the like, dyes similar to the cyanine-system, or cyanine dyes, bonded by the squarylium group and chlochonic methine group, the condensed polycyclic aromatic group, such as anthracene, pyrene or the like, chain compounds in which aromatic or heterocyclic compounds are condensed, or the like.

### (2) Macromolecular compounds

Polyimide derivatives, polyamic-acid derivatives, various kinds of fumaric-acid copolymers of polyamide derivatives, various kinds of fumari-acid copolymers of various kinds of maleic amide derivatives, various kinds of maleic-acid copolymers, polyacrylic-acid derivatives, various kinds of acrylic-acid derivatives, polymethacrylic-acid derivatives, various kinds of methacrylic-acid copolymers, polydiacetylene derivatives, various kinds of vinyl compounds, synthetic polypeptides, biomacromolecular compounds, such as bacteriorhodopsin or cytochrome C, or the like.

### (3) Fatty acids

Carboxylic acid and carboxylic acid salt having long-chain alkyl group and their fluorine-substituted compounds, ester having at least one long-chain alkyl group, sulfonic acid and its salts, phosphoric acid and its salts and their fluorine-substitutions, or the like.

Especially from the viewpoint of heat resistance, it is desirable to use, among these compounds, macromolecular compounds, or macrocyclic compounds such as phthalocyanine or the like. Especially when macromolecular materials, such as polyimide family, polyacrylic-acid family, polymethacrylicacid family, various kinds of fumaric-acid copolymers, various kinds of maleic-acid copolymers or the like, are used, excellent heat resistance can be obtained, and, at the same time, the film thickness per one layer can be made about 4 - 10 Å.

It goes without saying that any materials suitable for the LB method other than those described above can also be properly used in the present invention.

As the conductive thin film 4, metal films, such as Al, Ag, Zn, Sn, Pb or the like, alloy films of these metals and semiconductive thin films, such as As₂Se₃, CdS, ZnO, GaAs, Si (single-crystal silicon, polysilicon, amorphous silicon) can be used. In the present invention, it is required that the film thickness of such conductive thin film 4 is no larger than 500 Å, preferably no larger than 100 Å, more preferably no larger than 50 Å. Especially when a metal or an alloy of metals is used, the film thickness is preferably no larger than 50 Å.

As the method for forming the conductive thin film 4, it is possible to use the conventional well-known film-forming techniques. Especially it is preferable to use the vacuum deposition method, cluster ion beam method, CVD method, plasma polymerization method, MBE method or sputtering method.

On the above-described conductive thin film 4, the insulating thin film 5 is formed, the constituent material of which may be the same as or different from that of the insulating thin film 3 on the lower electrode 2, and is formed by one of the various methods already described. The optical switching device of the present invention is produced by further forming the upper electrode 6 on such insulating region by one of the methods described above. As the substrate 1 for supporting the laminated thin films consisting of inorganic and organic materials, any material, such as metal, glass, ceramics, plastics or the like, may be used. Biomaterials the heat resistance of which is remarkably inferior may also be used. Further, it is preferable that such substrate 1 is flat, but it is not limited thereto.

Next, the switching characteristics of the optical switching device having the configuation described above will be explained through a concrete example.

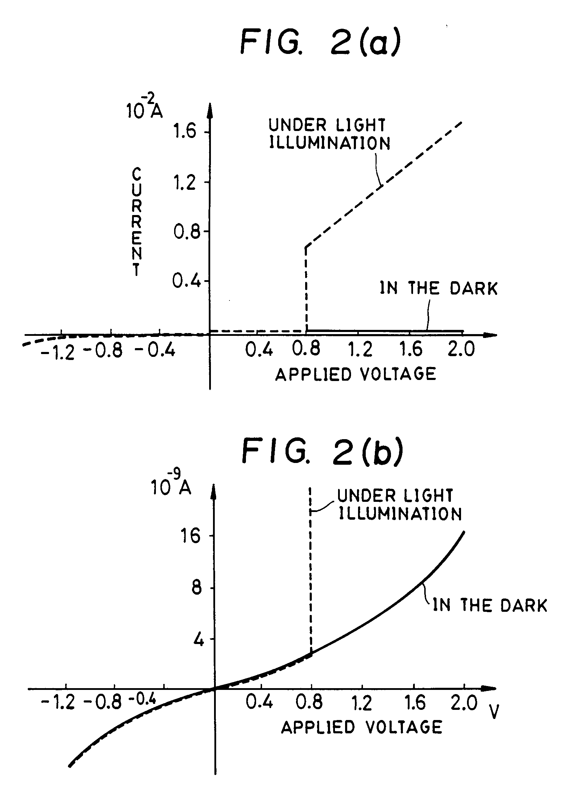

An optical switching device was produced using a vacuum-deposited film (300 Å and 600 Å thick) of Au on Cr as the lower electrode 2 on the subtrate 1 made of glass, an accumulated film of LB ten layers of polyimide (40 Å thick) as the insulating thin film 3, an Al vacuum-deposited film as the conductive thin film 4, an Al₂O₃ film (20 Å thick together with the Al vacuum-deposited film) as the insulating thin film 5 and vacuum-deposited films of Al and Au (300 Å and 600 Å thick, respectively) as the upper electrode 6. The characteristics of current (ordinate) when voltage (abscissa) is applied between the upper and lower electrodes (V-I characteristics) of this optical switching device are shown in FIGS. 2 (a) and 2 (b). In FIG. 2 (a), since the device is in high-resistance state (resistance ∼ 10⁸Ω) up to the applied voltage of 2 V, very few current flows. On the other hand, under light illumination (white light ∼ 70 µw/0.55 cm²), the device is in high-resistance state up to the threshold voltage Vₜₕ = 0.8 V of the optical switching device, but is converted into a low-resistance state (resistance ∼ 10Ω) by applying a voltage exceeding the threshold value. In FIG. 2 (b), the variation of current near the above-described threshold value is enlarged with making the range of current smaller (∼ 10 ⁻⁹ A). The switching speed into such low-resistance state is less than 1 µsec. The device promptly returns into the high-resistance state by interrupting the light illumination. The switching speed at this moment is also less than 1 µsec. That is, by performing light illumination - nonillumination on such optical switching device under applying a voltage no less than the threshold value, it is possible to perform the switching of an electric circuit which has the optical switching device as a series component. Consequently, when this optical switching device in incorporated in the driving circuit of a display medium having the responsive property to electric field, such as liquid crystal, EL or the like, it is possible to easily constitute a display device which uses light as input signal.

As noted above, the period from light being applied to the switching device to the switching device turning on is very short. It may even be of the order of a nanosecond. The turn-off time is similarly short. However, the period from the switching device turning on to the display medium changing state may be longer. This period will vary according to the nature of the display medium. It may be 1ms or less for a ferroelectric liquid crystal, and about 20 to 80ms for a twisted nematic liquid crystal. The time taken for the display medium to change back to the original state after the switching device turns off may be 60 to 150ms for a twisted nematic liquid crystal. A ferroelectric liquid crystal typically does not revert to its original state until a reverse field is applied, and therefore if this display medium is used the switching device should be provided with means for applying this reverse field also when desired (it may be provided to all pixels of a display panel simultaneously). Other display media may take different times to change state when the switching device turns on or off. Accordingly, if a display panel has a number of pixels each associated with a switching device, the period for which each switching device is illuminated will depend on the nature of the display medium, the number of pixels, and the frame period used with the display panel.

The basic configuration when the present invention is applied to a liquid crystal display device will be hereinafter explained with reference to the drawings.

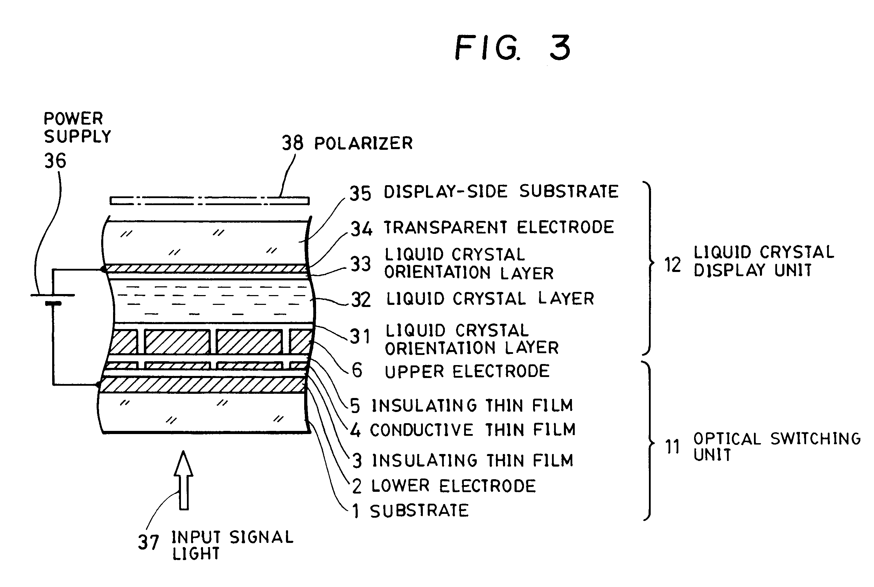

FIG. 3 is a configurational diagram of a display device using a liquid crystal as the display medium. In FIG. 3, on the optical switching unit 11 comprising a substrate 1, a lower electrode 2, an insulating thin film 3, a conductive thin film 4, an insulating thin film 5 and an upper electrode 6, a liquid crystal display unit (a liquid crystal cell) 12 comprising a liquid crystal orientation layer 31, a liquid crystal layer 32, a liquid crystal orientation layer 33, a transparent electrode 34 and a display-side substrate 35 is directly disposed. A pair of electrodes is necessary for driving the liquid crystal. In the present embodiment, the upper electrode 6 of the optical switching unit 11 is used as it is as one of such and made of other material may also be formed on the upper electrode 6 by the vacuum deposition or the like. In any case, the upper electrode 6 of the optical switching unit 11 and one of the pair of electrodes of the liquid crystal display unit 12 are the same one or electrically short-circuited to each other. It will be noted that these electrodes are formed in a shape in accordance with the desired display densitity or display pattern, but it is not necessary to provide matrix interconnection or the like.

It is necessary that the substrate 1 and the display-side substrate 35 have sufficient transmittance for the wave-length region of an input signal light 37 and the visible region, respectively. Especially it is desirable to use glass, plastic material or the like, which has high transparency, for the display-side substrate 35. In some cases, this substrate may be colored due to the demand of coloring or the like.

In the liquid crystal display device having such basic configuration, between the transparent electrode 34 and the lower electrode 2, a voltage which is necessary and sufficient for driving the liquid crystal is applied by a power supply 36. This voltage must be larger than the threshold voltage of the optical switching device, and a liquid crystal material driven by a proper voltage is selected according to such requirement. In general, since the threshold voltage of the optical switching device is no more than 1.0 V, almost all commercial liquid crystal materials can be used without any problem.

Under the condition as described above, suppose that it is now in the dark. Since the optical switching device is then in high-resistance state, no electric field is applied to the liquid crystal layer 32. Next, when the input signal light 37 is projected on the optical switching unit 11 from the side of the substrate 1, only the irradiated region selectively becomes in low-resistance state. Hence, electric field is applied between the upper electrode 6 and the transparent electrode 34 corresponding to the irradiated region, and the orientation of the liquid crystal is controlled. Accordingly, the display density and resolution in the liquid crystal display device are determined by either which is larger between the one segment area of the upper electrode 6 and the irradiated area by the input signal light 37.

It goes without saying that FIG. 3 is a diagram showing only the basic configuration, and the configuration may be properly modified according to the difference in the kind of the liquid crystal which is used, or the like.

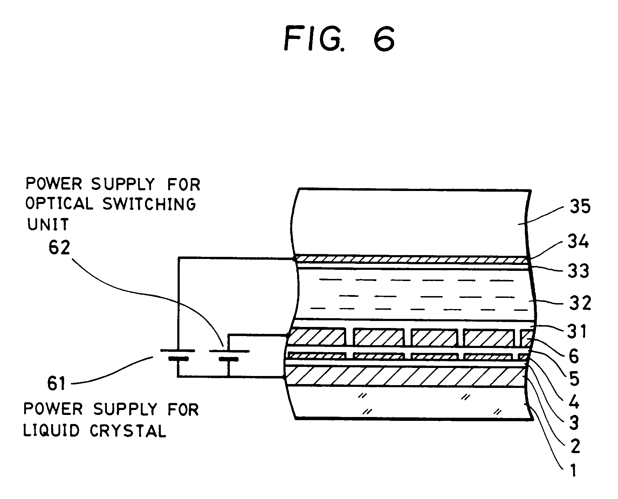

For example, in order to further ensure the operation of the optical switching unit , a biasing voltage no less than the threshold voltage of the optical switching unit may always be applied using a power supply (a power supply 62 for the optical switching unit) which is different from a power supply 61 for driving the liquid crystal, as shown in FIG. 6 (like numerals in FIG. 6 indicate like components as those in FIG. 3). In FIG. 6, the power supply for the optical switching unit is connected to only one segment at left of the upper electrode 6 (of the optical switching unit). Actually, however, all segments of the upper electrode and the lower electrode 2 are connected to the power supply for the optical switching unit. Although not shown in FIG. 6, it may be necessary to provide a resistance between each segment of the upper electrode 6 and the additional power supply 62, if the resistance of the components forming the connection is not itself sufficient. This resistance allows the voltage of one segment of the upper electrode 6 to fall to near the voltage of the lower electrode 2 when the segment is illuminated, in spite of the power supply 62 and without also pulling down the voltage of all the other segments of the upper electrode 6. The resistance might typically be 100 Ohm to 100k Ohm, more typically 1-10k Ohm. It should be less than the resistance of the liquid crystal.

Further, for example, when the most commonly-used TN-mode display is utilized, it is necessary to provide a polarizer 38 as shown in FIG. 3. Further, in most cases, it is necessary to provide a reflective layer in the liquid crystal display unit 12. For this purpose, for example, it is also possible to use a configuration in which a suitable metal is evaporated on the upper electrode 6 or over the upper electrode 6, or the like.

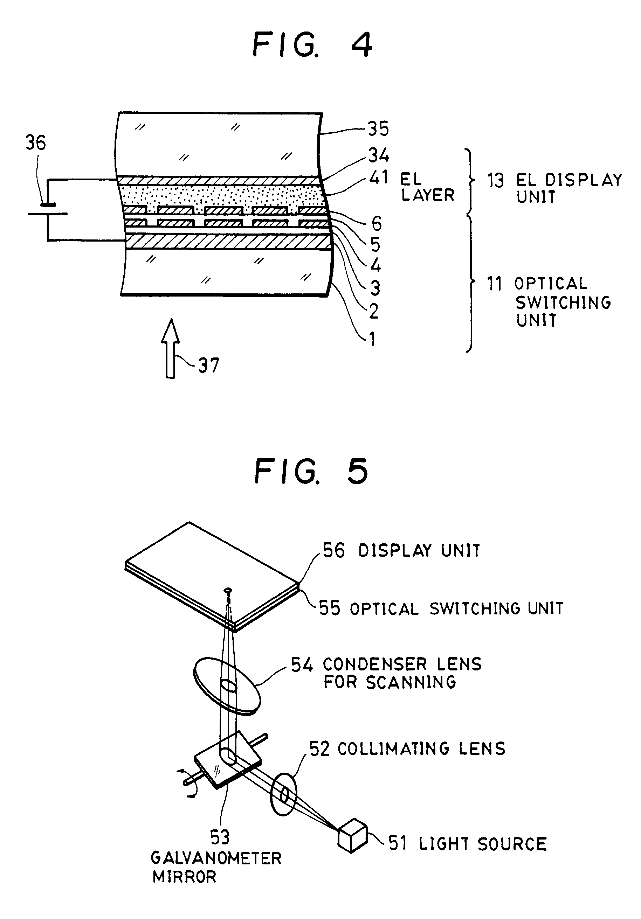

On the other hand, when an EL material is used as the display medium, an EL layer 41 is held between the transparent electrode 34 and the upper electrode 6 as shown in FIG. 4. Other configurations are quite the same as when the liquid crystal is used.

However, almost all El materials now being developed necessitate a voltage as high as from several decades of V to several hundreds of V for their driving. Hence, it is difficult to put the EL material to practical use at this moment, but the El material can be satisfactorily utilized if a material capable of being driven at low voltage were developed.

In the structure illustrated in Figure 3, the function of the conductive thin film 4 is not fully understood, but it has been found that the switching performance of the illustrated structure is better than the switching performance of a similar structure having no conductive thin film 4 and only one insulating thin film.

In all the display device explained above, display is performed in accordance with the illumination - nonillumination of the input signal light. Hence, in order to perform a display having a certain area, it is necessary to scan the input signal light. As the scanning optical system for the light beam, those which are generally used can be satisfactorily utilized. The basic configuration of the system is shown in FIG. 5. In FIG. 5, as a light source 51, a semiconductor laser is usually used. The luminous flux from the semiconductor laser is made a parallel beam by a collimating lens 52, which beam is focused on an optical switching unit 55 by a condenser lens 54 for scanning via a galvanometer mirror 53, and a display unit 56 is driven. The light-beam scanning system shown here is an example. It may have any other form with the condition of having the equivalent function, such that plural scanning systems are used together, a combination of a voice coil and a stepping motor is used instead of the galvanometer mirror 53, or the like.

As the display medium used in the present invention, any material which shows display function by applying voltage, such as liquid crystal, EL or the like, can be widely used. However, since the break-down voltage of the optical switching device used in the present invention is 20 V at maximum, and the maximum allowable current at low resistance state is 100 mA, display media are limited to those which operate within those ranges. Nevertheless, since the ratio of the current at low-resistance state to that at high-resistance state i_{ON}/i_{OFF} is as large as 10⁶ - 10⁷, it is possible to use, in the liquid crystal display media, the field-effect-type liquid crystal display method(the TN-mode display, DTN-mode display, SBE-mode display, GH-mode display, ECB-mode display, PC-mode display or the like) and the dynamic-scattering-type liquid crystal display method, and many of liquid crystal materials used in these methods.

Further, the display media which can be utilized in the present invention are not to be limited to those described above. Any display media which operate at low voltage application (no more than about 20 V) can be satisfactorily utilized.

### EXAMPLE 1

An optical switching unit having the configuration of the lower electrode 2/the insulating thin film 3/the conductive thin film 4/the insulating thin film 5/the upper electrode 6 was formed by the procedure described hereafter. On the glass substrate 1 subjected to hydrophobic processing by leaving in the saturated vapor of hexamethyldisilazane (HMDS) during one whole day, Cr 300 Å thick was deposited as an underlayer by the vacuum deposition, then Au (600 Å thick) was deposited by the same method, and the lower electrode 2 in the shape of a stripe 1 mm wide was formed. An accumulated film (about 40 Å thick) consisting of ten monomolecular layers of polyimide films was formed on such substrate by the LB method, to obtain the insulating thin film 3.

The method of forming an accumulated film consisting of monomolecular layers of polyimide will be hereinafter described in detail.

Polyamide acid shown in Formula (1) was dissolved (monomer-reduced concentration : 1 x 10⁻³ M) in a mixed solvent of N, N-dimethylacetoamide-benzene (1:1 V/V), and then the resultant solution was further mixed with a separately-prepared 1 x 10⁻³ M solution of N, N-dimethyloctadecylamine in the above-described solvent in 1:2 (V/V) ratio to prepare a solutin of the octadecyl amine salt of polyamide acid shown in Formula (2).

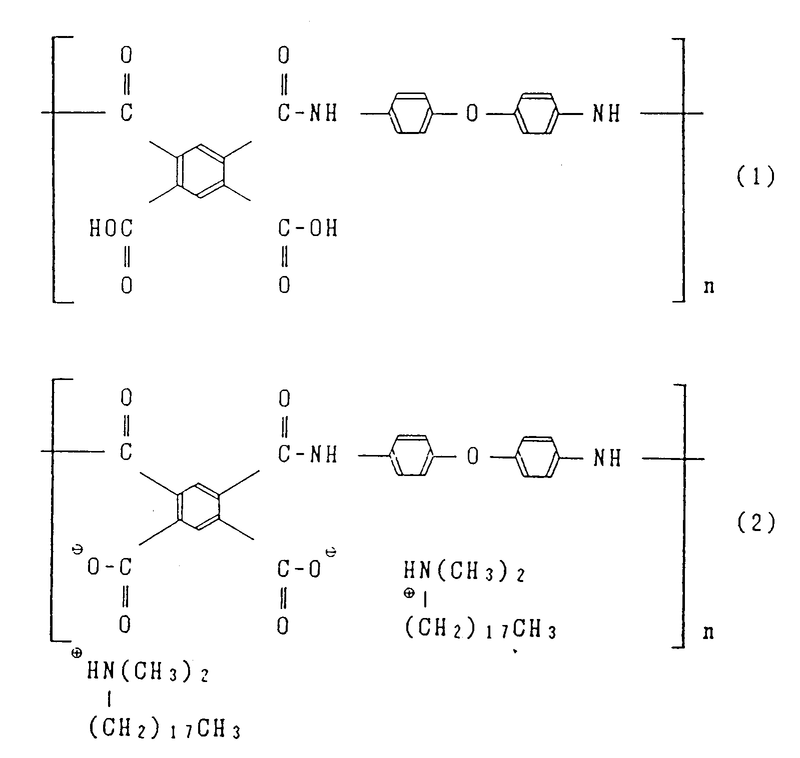

Such solution was spread over pure water at a temperature of 20 °C, and, using the LB method, an accumulated film consisting of ten monomolecular layers of octadecylamine salt of polyimide acid was formed on the above-described substrate having the lower electrode. The surface pressure at this time was 25 mN/m, and the elevating the lowering speed of the substrate was 5 mm/min.

Next, such substrate was fired at 400 °C for 30 minutes to convert the octadecylamine salt of polyimide acid in an imide (Formula (3)), and thus an accumulated film consisting of ten monomolecular layers of polyimide was obtained. 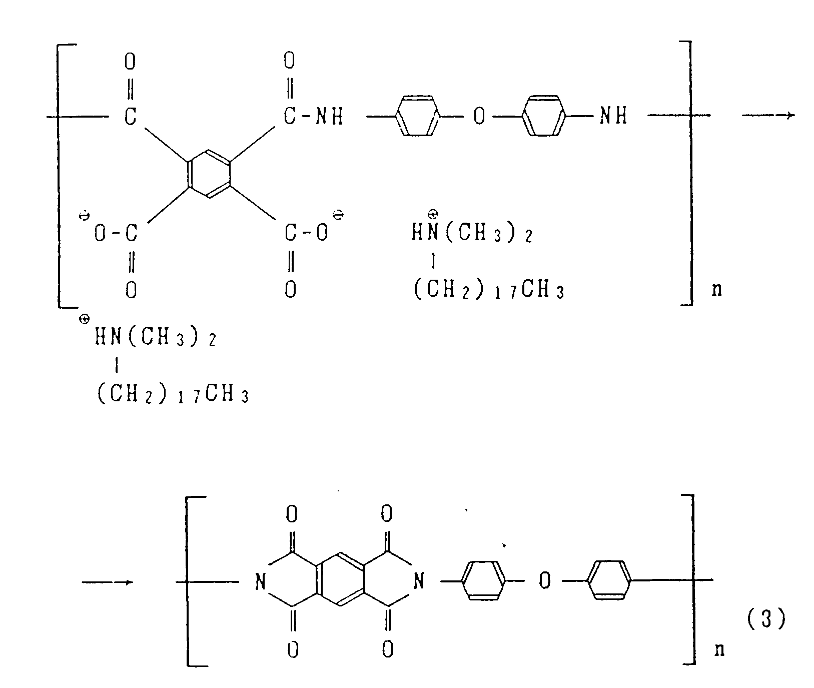
Next, on the surface of such accumulated film consisting of monomolecular layers of polyimide, Al was deposited in vacuum (20 Å thick) in the shape of a stripe 1 mm wide so as to make a right angle with the lower electrode 2, to form the conductive thin film 4. At this time, the temperature of the substrate surface was maintained at no higher than room temperature. The film-forming rate was 3 Å/sec. Then, the surface of such Al conductive thin film was oxidized by bringing back the pressure of the vacuum chamber to the atmospheric pressure, to form the insulating thin film 5 of Al₂O₃. Subsequently, the vacuum chamber was again evacuated, and Al (300 Å thick) and Au (600 Å thick) were successively deposited in vacuum on the position having the same shape as the conductive thin film 4 to obtain the upper electrode 6.

On the optical switching unit 11 formed as described above, the liquid crystal display unit 12 was formed by the following procedure. That is, a polyimide resin was coated with a spinner (750 Å thick) on the substrate 1 which includes the optical switching unit 11, and then rubbing processing was performed to obtain the liquid crystal orientation layer 31. On the other hand, on a glass substrate which is the display-side substrate 35, an ITO film (2000 Å thick) was deposited to form the transparent electrode 34, a polyimide resin was coated by a spinner (750 Å thick) on such transparent electrode 34, and then rubbing processing was performed. Next, a liquid crystal cell was constituted using the above-described switching unit 11 and the display-side substrate 35. The liquid crystal used was E-37 (product of BDH Corp), and the thickness of the liquid crystal layer 32 was 10 µm.

A DC voltage of 2.5 V was applied between the transparent electrode 34 and the upper electrode 6 of the liquid crystal display device formed as described above, and the orientation state of the liquid crystal was observed from the side of the display-side substrate 35 using a polarizing microscope. As a result, it has been found that the liquid crystal has the twist orientation when there is no light illumination (white light∼70 µw/0.55 cm²) from the side of the substrate 1, and, by light illumination, the liquid crystal of the upper electrode 6 has the vertical orientation. Further, it has been confirmed that, when such light illumination is interrupted, the liquid crystal promptly returns to the twist orientation.

### EXAMPLE 2

Cr 300 Å thick was deposited on the glass substrate 1 by the vacuum deposition as an underlayer, and Au (600 Å thick) was then deposited by the same method, and the lower electrode 2 having the shape of a stripe 1 mm wide was formed. On such substrate 1, an accumulated film consisting of ten monomolecular layers of polyimide was formed by the same method as in Example 1 to obtain the insulating thin film 3.

Next, on the surface of this accumulated film consisting of monomolecular layers of polyimide, an amorphous silicon film 30 Å thick was formed to obtain the semiconductive thin film 4. In this case, the film was formed by the glow discharge method (introduced gases: SiH₄, H₂, rf power; 0.01 W/cm², pressure: 0.5 torr, substrate temperature: 250 °C, deposition rate: 40 Å/min). Subsequently, a mixed gas consisting of silane (SiH₄) gas and ammonia gas was introduced, and a silicon nitride (Si₃N₄) film 15 Å thick was deposited (rf power: 0.02W/cm², pressure: 0.5 torr, substrate temperature: 250 °C, deposition rate: 50 Å/min), to form the insulating thin film 5.

Next, on the surface of this silicon nitride film, Al (300 Å thick) and Au (600 Å thick) was successively deposited in vacuum in the form of a stripe 1 mm wide so as to make a right angle with the lower electrode 2.

On the optical switching unit formed as described above, the same liquid crystal display unit as that in Example 1 was formed. The orientation of the liquid crystal for signal input light of such samples was investigated in the same manner as in Example 1, and it was confirmed that the samples show the same responsive property to light.

### EXAMPLES 3 through 7

Samples were prepared totally in the same manner as in the above-described Example 1, except that the insulating thin films 3 were formed by the LB method using insulating materials shown in the following TABLE 1. The orientation of the liquid crystal for signal input light of these samples was investigated. The samples showed the same responsive property to light as that in the above-described Example 1.

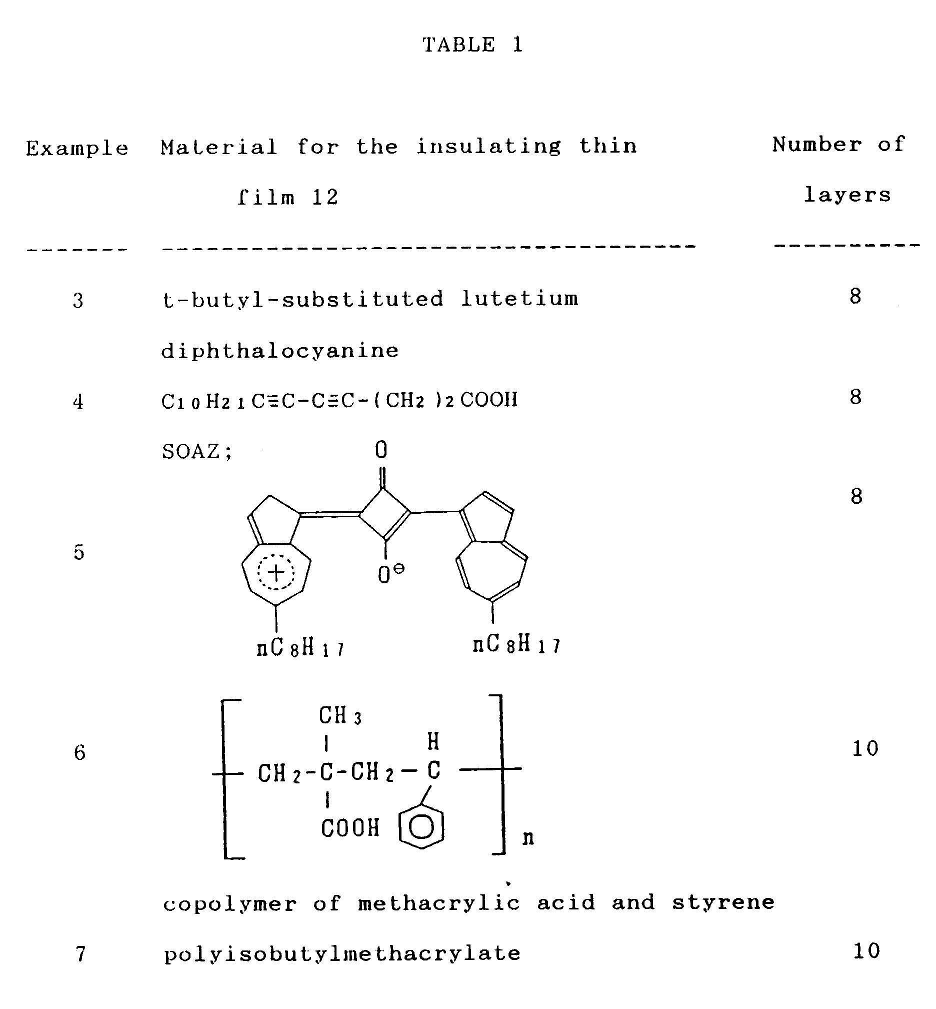

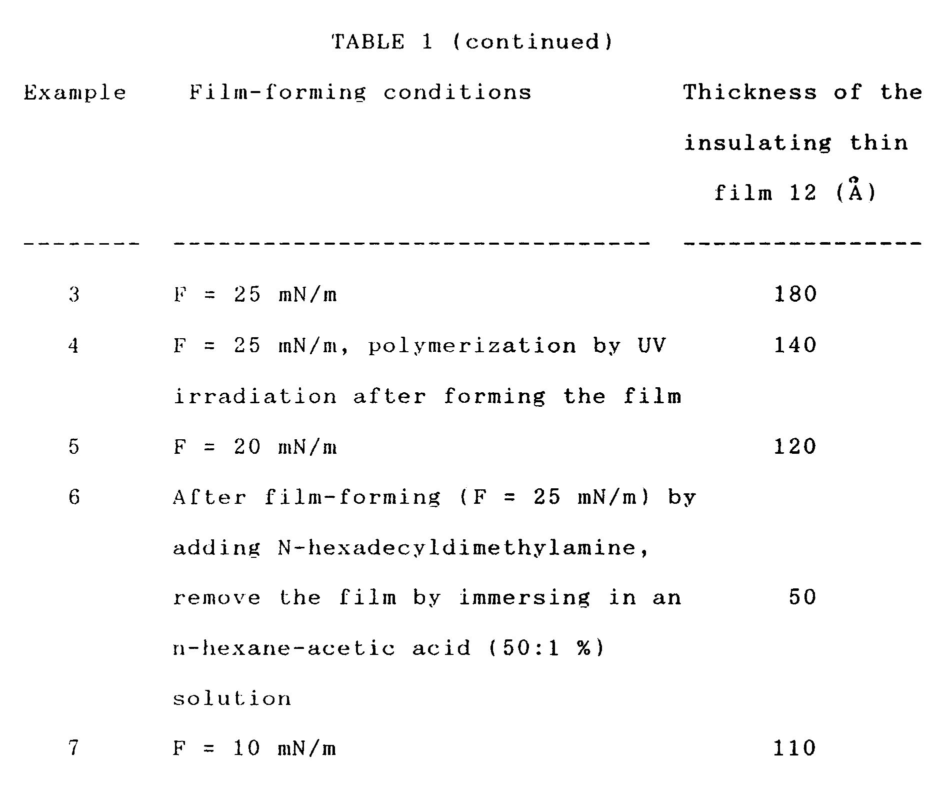

### EXAMPLE 8

A display device was formed in the same manner as in Example 1, except that the lower electrode was formed on the glass substrate 1 in the dimensions of 1 x 2 cm, and the conductive thin film 4, the insulating thin film 5 and the upper electrode 6 were formed in the 100 µm-square dot-matrix shape (120 µm pitch). A 2.5 V DC voltage was applied between the transparent electrode 34 and the upper electrode 6 of such samples, and the light corresponding to input signal was irradiated from the side of the optical switching unit (from the side of the substrate 1) using the laser-beam scanning system having the configuration shown in FIG. 5. It was confirmed that the state of the orientation of the liquid crystal in the liquid crystal unit on the dot-matrix-like electrode changes from the twist orientation to the vertical orientation only in irradiated portions. Further, it was also confirmed that the liquid crystal returns from such state of the vertical orientation to the twist orientation when light illumination is interrupted. As the light source, a GaAlAs laser array (beam diameter; 20 µm, 10 mW) was used.

### EXAMPLE 9

Cr 300 Å thick was deposited on the glass substrate 1 by the vacuum deposition as an underlayer, and then Au (600 Å thick) was deposited by the same method, to form the lower electrode 2 having the shape of a stripe 1 mm wide. On such substrate, silicon nitride (Si₃N₄) film 40 Å thick was deposited by the glow discharge method (introduced gas: a mixed gas of SiH₄ and NH₂, rf power: 0.02 W/cm², pressure: 0.5 torr, substrate temperature: 300 °C, deposition rate: 60 Å/min), to form the insulating region 3.

Next, on the surface of such silicon nitride film, Al (20 Å thick) was deposited in vacuum with the shape of a stripe 1 mm wide so as to make a right angle with the lower electrode to form the conductive region 4. Subsequently, the the pressure of the vacuum chamber was brought back to the atmospheric pressure in order to oxidize the surface of the Al conductive layer, to form the insulating region 5. Then, the vacuum chamber was again evacuated, and Al (300 Å thick) and Au (600 Å thick) were successively deposited to form the upper electrode 6.

On the optical switching unit formed as described above, the same liquid crystal display unit as that in Example 1 was formed. The state of the orientation of the liquid crystal for signal input light of such samples was investigated in the same manner as in Example 1. The samples showed the same responsive property to light as that in Example 1.

### EXAMPLE 10

After having formed the lower electrode 2 and the Si₃H₄ insulating region 3 in the same manner as in the above-described Example 9, an amorphous silicon film 40 Å thick was formed by the glow discharge method, to form the semiconductive region 4 (introduced gas: SiH₄, H₂, rf power: 0.01 W/cm², pressure: 0.5 torr, substrate temperature: 300 °C, deposition rate: 40 Å/min). Subsequently, the surface layer portion (about 10 Å) of such amorphous silicon was converted into silicon nitride (Si₃N₄) by the thermal nitriding method, to form the insulating region 5. Next, Al (300 Å thick) and Au (600 Å thick) were successively deposited in vacuum in the shape of a stripe 1 mm wide so as to make a right angle with the lower electrode 2, to form the upper electrode 6.

On the optical switching unit formed as described above, the same liquid crystal display unit as that in Example 1 was formed. The state of the orientation of the liquid crystal for signal input light of such samples was investigated in the same manner as in Example 1. The samples showed the same responsive property to light as that in Example 1.

### EXAMPLE 11

After having formed the Cr-Au lower electrode 2 and the Si₃H₄ insulating region 3 in the same manner as in the above-described Example 9, Ag (20 Å thick) was deposited in vacuum to form the conductive region 4. Subsequently, a silicon nitride (Si₃N₄) film 15 Å thick was deposited by the glow discharge method, to form the insulating region 5. Then, Al (300 Å thick) and Au (600 Å thick) were successively deposited in vacuum in the shape of a stripe 1 mm wide so as to make a right angle with the lower electrode 2, to obtain the upper electrode 6.

On the optical switching unit formed as described above, the same liquid crystal display unit as that in Example 1 was formed. The state of the orientation of the liquid crystal for signal input light of such samples was investigated in the same manner as in Example 1. The samples showed the same responsive property to light as that in Example 1.

### EXAMPLE 12

Samples were prepared totally in the same manner as in the above-described Example 11, except that the conductive region made of Ag was replaced by the semiconductive region (40 Å thick) made of ZnS (the ion-cluster-beam method, acceleration voltage: 3 kV, substrate temperature: 150 °C, deposition rate: 40 nm/min). The change in the state of the orientation of the liquid crystal for signal input light of such samples was investigated in the same manner as in Example 1. The samples showed the same responsive property to light as that in Example 1.

As explained above, according to the present invention, it is possible to input information signals by the optical addressing method, by means of combining an optical switching device obtained by alternately laminating insulating thin films and a conductive thin film, with a driving circuit of a display medium having responsive property to electric field, such as liquid crystal, EL or the like. Hence, it is not necessary to form a complicated interconnection pattern on a substrate, and production process can also be simplified. Moreover, since electric field can be directly applied to each of picture elements, it is possible to provide a high-density and high-quality display.

## Claims

1. A light modulating device comprising:
an array (7) of thin-film electrical switching elements;
an electrically-actuable optical modulating material (32) overlying the array of elements;
means (2,6,34) for applying an electric field across the elements and material; and
means (51,52,53,54) for addressing the elements so that the elements modulate the electric field applied to respective portions of the material, and characterised in that said switching elements are optically actuable switching elements each of which comprises a conductive or semi-conductive film (4) located between insulating films (3,5), and in that the means for addressing comprise means (51) for generating optical address signals.

2. A light modulating device according to claim 1 and further characterised in that said optical-modulating material (32) is a liquid crystal display device.

3. A light modulating device according to claim 1 or claim 2, and further characterised in that said optical signal is provided by a semiconductor laser (51).

4. A light modulating device according to any one of the preceding claims and further characterised in that the optical addressing means comprises a light source (51), a collimating lens (52), a galvanometer mirror (53) and a condenser lens (54) for scanning.

## Patentansprüche

1. Lichtmodulationsvorrichtung mit:
einer Anordnung (7) von elektrischen Schaltelementen in Form von dünnen Filmen;
einem elektrisch-auslösbaren, optischen Modulationsmaterial (32), das über der Anordnung der Elemente liegt;
Einrichtungen (2, 6, 34) für das Anlegen eines elektrischen Feldes über die Elemente und das Material; und Einrichtungen (51, 52, 53, 54) für die Adressierung der Elemente, so daß die Elemente das elektrische Feld modulieren, das an die entsprechenden Abschnitte des Materials angelegt ist, dadurch gekennzeichnet, daß die Schaltelemente optisch-auslösbare Schaltelemente darstellen, die jeweils einen leitenden oder einen halbleitenden Film (4) aufweisen, die zwischen isolierenden Filmen (3, 5) angeordnet sind, und daß die Einrichtungen für die Adressierung Einrichtungen (51) für die Erzeugung von optischen Adressiersignalen aufweisen.

2. Lichtmodulationsvorrichtung nach Anspruch 1 und ferner dadurch gekennzeichnet, daß das optisch-modulierende Material (32) eine Flüssigkristall-Anzeigevorrichtung ist.

3. Lichtmodulationsvorrichtung nach Anspruch 1 oder 2 und ferner dadurch gekennzeichnet, daß das optische Signal von einem Halbleiter-Laser (51) bereitgestellt wird.

4. Lichtmodulationsvorrichtung nach einem der vorangehenden Ansprüche und ferner dadurch gekennzeichnet, daß die optischen Adressiereinrichtungen für das Abtasten eine Lichtquelle (51), eine Kollimatorlinse (52), einen Galvanometerspiegel (53) und eine Kondensorlinse (54) aufweisen.

## Revendications

1. Dispositif de modulation de lumière comprenant:
un réseau (7) d'éléments de commutation électrique à films minces;
un matériau de modulation optique pouvant être activé électriquement (32) superposé au réseau d'éléments;
des moyens (2,6,34) pour appliquer un champ électrique à travers les éléments et le matériau; et
des moyens (51,52,53,54) pour adresser les éléments de façon que les éléments modulent le champ électrique appliqué à des parties respectives du matériau, et caractérisé en ce que lesdits éléments de commutation sont des éléments de commutation pouvant être activés optiquement dont chacun comprend un film conducteur ou semiconducteur (4) situé entre des films isolants (3,5), et en ce que les moyens d'adressage comprennent un moyen (51) pour générer des signaux d'adresses optiques.

2. Dispositif de modulation de lumière selon la revendication 1, caractérisé en outre en ce que ledit matériau de modulation de lumière (32) est un dispositif d'affichage à cristaux liquides.

3. Dispositif de modulation de lumière selon la revendication 1 ou 2, caractérisé en outre en ce que ledit signal optique est fourni par un laser à semiconducteur (51).

4. Dispositif de modulation de lumière selon l'une quelconque des revendications précédentes, caractérisé en outre en ce que les moyens d'adressage optique comprennent une source émettant de la lumière (51), une lentille de collimation (52), un miroir de galvanomètre (53) et un condenseur (54) pour effectuer un balayage.
